(19) Europäisches Patentamt
European Patent Office
Office européen des brevets

(11) Veröffentlichungsnummer: **0 529 335 B1**

(12) **EUROPÄISCHE PATENTSCHRIFT**

(45) Veröffentlichungstag der Patentschrift: **25.10.95**

(51) Int. Cl.6: **C09D 7/12**, C09D 5/02

(21) Anmeldenummer: **92112970.6**

(22) Anmeldetag: **30.07.92**

# (54) Verfahren und Füllermasse zur Herstellung steinschlagresistenter Mehrschichtlackierungen.

(30) Priorität: **01.08.91 DE 4125459**

(43) Veröffentlichungstag der Anmeldung:
**03.03.93 Patentblatt 93/09**

(45) Bekanntmachung des Hinweises auf die Patenterteilung:
**25.10.95 Patentblatt 95/43**

(84) Benannte Vertragsstaaten:
**DE FR**

(56) Entgegenhaltungen:
**EP-A- 0 083 139**
**EP-A- 0 433 783**
**DE-A- 3 805 629**
**GB-A- 2 094 815**

(73) Patentinhaber: **Herberts Gesellschaft mit beschränkter Haftung**
**Christbusch 25**
**D-42285 Wuppertal (DE)**

(72) Erfinder: **Doebler, Klaus Peter**
**An der Hoffnung 19**
**W-5608 Radevormwald (DE)**
Erfinder: **Göldner, Wolfgang, Dr.**
**Bayernstrasse 15**
**W-5628 Heiligenhaus (DE)**
Erfinder: **Grütter, Roland, Dr.**
**Cordulastrasse 14**
**W-5600 Wuppertal 1 (DE)**
Erfinder: **Jungermann, Reiner**
**Cimbernstrasse 54**
**W-4600 Dortmund 30 (DE)**
Erfinder: **Oppermann, Manfred, Dr.**
**Mirkerstrasse 57**
**W-5600 Wuppertal (DE)**

(74) Vertreter: **Hrabal, Ulrich, Dr.**
**Türk, Gille, Hrabal, Leifert**
**Brucknerstrasse 20**
**D-40593 Düsseldorf (DE)**

EP 0 529 335 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft wäßrige Füllermassen zur Herstellung von Mehrschichtlackierungen, die ein oder mehrere wasserverdünnbare Bindemittel enthalten. Derartige Füllermassen sind zur Herstellung von steinschlagresistenten Mehrschichtlackierungen insbesondere auf dem Kraftfahrzeugsektor geeignet. Die Erfindung betrifft daher auch ein Verfahren zur Herstellung von steinschlagresistenten Mehrschichtlackierungen sowie die Verwendung der wäßrigen Füllermassen hierzu.

Unter Füller (primer surfacer) versteht man ein Überzugsmittel, welches in Mehrschichtüberzügen oder Mehrschichtlackierungen, insbesondere auf dem Kraftfahrzeugsektor, z.B. auf einer Grundierung oder einem Steinschlagzwischengrund aufgetragen wird und wegen seines Füllvermögens die Unebenheiten der darunterliegenden Schicht und des Substrates, z.B. eines Bleches, ausgleicht, damit eine glattere Oberfläche vor dem Aufbringen der darauf folgenden Schichten entsteht.

Unter Füllvermögen versteht man demnach das Vermögen eines Anstrichstoffes, die Unebenheiten des Untergrundes auszugleichen, wodurch der optische Effekt einer besonders gut lackierten Fläche in der folgenden Deckschicht (Fülle) erzeugt wird.

Im allgemeinen enthält der Füller ein höheres Pigment- bzw. Füllstoff-Volumen-Verhältnis als die nachfolgenden Schichten. Die Farbe des Füllers ist unbunt oder bunt. Sie braucht nicht der Farbe eines nachfolgenden Decklacks zu gleichen.

Im Zuge der Zeit müssen die Füller in Zukunft aus ökologischen Gründen möglichst frei von organischen Lösemitteln sein. Hierzu sind zwei Wege möglich: Die High-Solid-Systeme auf Lösemittelbasis mit hohem Feststoffanteil und die wasserverdünnbaren Systeme mit äußerst geringem Gehalt an organischen Lösemitteln. Mit den wasserverdünnbaren Systemen erhält man im Vergleich zu den High-Solid-Systemen interessantere Füller mit niedrigerem Anteil an organischen Lösemitteln.

Die für die Automobilindustrie brauchbaren, wasserverdünnbaren Füller enthalten im allgemeinen aus verschiedenen Gründen noch organische Lösemittel. Der Anteil dieser Lösemittel und flüchtiger Neutralisationsmittel soll so gering wie möglich sein und möglichst nicht über 25 Gew.-%, bevorzugt nicht über 20 Gew.-%, bezogen auf die Summe der Gewichts- bzw. Massenanteile von Lackfestkörper, organischen Lösemitteln und flüchtigen Neutralisationsmitteln liegen; oder anders ausgedrückt, soll der High-Solid-Wert nicht unter 75 Gew.-%, bevorzugt nicht unter 80 Gew.-%, liegen.

Die Berechnung erfolgt nach der Formel

$$\text{High-Solid-Wert (Gew.-\%)} = \frac{FK \times 100}{FK + LM + Nm}$$

FK = g Festkörper (30 Minuten 105 °C)
LM = g organische Lösemittel
NM = g flüchtige Neutralisationsmittel

Durch den Austausch der lösemittelverdünnbaren Füller gegen wasserverdünnbare Füller dürfen keine Qualitätsverminderungen der Lackierung auftreten. Eine völlige Angleichung der Eigenschaften von wasserverdünnbaren Füllern mit geringem Gehalt an organischen Lösemitteln ist jedoch bisher nicht in ausreichendem Maße gelungen. So gehören besonders die Steinschlagresistenz und der Korrosionsschutz zu den Eigenschaften von wasserverdünnbaren Füllern, die von Charge zu Charge nicht immer reproduzierbar zu erhalten sind.

Aus der DE-PS-38 05 629 sind wasserverdünnbare, steinschlagfeste Überzugsmittel aus Kombinationen von Polyestern oder Acrylatharzen mit blockierten Isocyanaten bekannt. Auf diese Überzugsmittel wird ein wäßriger Füller appliziert, so daß ein zusätzlicher Arbeitsgang für die Applizierung der gesamten Lackierung notwendig ist.

In der internationalen Patentanmeldung mit der Veröffentlichungsnummer WO 88/03159 werden wasserverdünnbare Überzugsmittelzusammensetzungen und wäßrige Füller beschrieben, die mit Bisphenol A-Epoxidharzen modifizierte Polyester enthalten müssen. Der Nachteil dieser Systeme liegt in der begrenzten Bindemittelauswahl. Es ist jedem Fachmann bekannt, wie vielfältig und verschieden die Anforderungen an Füller für verschiedene Anwendungszwecke sein können. Aus diesem Grund ist es notwendig, nicht auf ein Bindemittelsystem beschränkt zu werden.

Es bestand daher die Aufgabe, wasserverdünnbare Füller bereitzustellen, deren Gehalt an organischen Lösemitteln gering ist und die unabhängig von der Wahl spezifischer Bindemittel auch in der Steinschlagresistenz und im Korrosionsschutz den lösemittelverdünnbaren Füllern ebenbürtig oder sogar überlegen sind. Solche Füller sollen insbesondere für die Automobillakkierung verwendet werden können.

Es hat sich gezeigt, daß diese Aufgabe gelöst werden kann, wenn man wäßrigen Überzugsmitteln, die als Füller eingesetzt werden sollen, als Zusatzstoffe Pulver aus Polyamid, Polyacrylnitril oder deren Gemische zusetzt, oder bei der Herstellung von wasserverdünnbaren Füllern mitverwendet. Hierdurch werden die Steinschlagfestigkeit und Korrosionsresistenz der lösemittelarmen oder lösemittelfreien, wasserverdünnbaren Füller verbessert.

Die Erfindung betrifft daher ein Verfahren zur Herstellung einer steinschlagresistenten Mehrschichtlakkierung auf elektrisch leitfähigen Substraten durch Auftrag einer Grundierung durch kathodische Elektroabscheidung aus einem wäßrigen Überzugsmittel und anschließend naß-in-naß, nach dem Ablüften, Trocknen oder Einbrennen, Auftrag einer Füllerschicht aus einer wäßrigen Füllermasse, enthaltend ein oder mehrere wasserverdünnbare, bei Temperaturen bis zu 180 °C härtbare Bindemittel, und Aufbringen, naß-in-naß, nach dem Trocknen oder Einbrennen, einer oder mehrerer Basis- und Decklackschichten, das dadurch gekennzeichnet ist, daß man eine wäßrige Füllermasse verwendet, die ein wasserverdünnbares Bindemittel auf der Basis von Hydroxylgruppen enthaltenden Polycarboxylverbindungen und eines oder mehrerer mit Hydroxylgruppen umsetzbarer polyvalenter filmbildender Kunstharze enthält, und die 0,1 - 20 Gew.-%, bevorzugt 0,5 bis 20 Gew.-% bezogen auf die gesamte Füllermasse, Polyamidpulver, Polyacrylnitrilpulver oder Gemische davon mit beliebigen Teilchendurchmessern aus dem Bereich 0,1 bis 100 µm enthält, wobei der High-Solid-Wert der wäßrigen Füllermasse nicht unter 75 Gew.% liegt.

Die Erfindung betrifft auch die wäßrigen Füllermassen zur Herstellung von steinschlagfesten Mehrschichtlackierungen, die ein oder mehrere wasserverdünnbare bei Temperaturen bis zu 180 °C härtbare Bindemittel auf der Basis von Hydroxylgruppen enthaltenden Polycarboxylverbindungen und eines oder mehrerer mit Hydroxylgruppen umsetzbarer polyvalenter filmbildender Kunstharze enthalten und die 0,1 bis 20 Gew.%, bevorzugt 0,5 bis 20 Gew.-% jeweils bezogen auf die gesamte wäßrige Füllermasse, Polyamidpulver oder Gemische von Polyamidpulver und Polyacrylnitrilpulver mit beliebigen Teilchendurchmessern aus dem Bereich von 0,1 bis 100 µm enthalten, wobei der High-Solid-Wert der wäßrigen Füllermasse nicht unter 75 Gew.-% liegt.

Bevorzugt werden solche Bindemittelsysteme für die erfindungsgemäßen Füllermassen verwendet, in denen die Bindemittelkomponente auf der Basis von Hydroxylgruppen enthaltenden Polycarboxylverbindungen keine kovalent an die Polycarboxylverbindungen gebundenen Aminogruppen aufweist, was jedoch nicht ausschließt, daß die Carboxylgruppen der Polycarboxylverbindungen durch Amine neutralisiert sein können.

Die Verwendung von Polymerpulvern in Beschichtungsmassen wird in der EP-B1-0 083 139 beschrieben. Dort werden Beschichtungszusammensetzungen auf der Basis organischer Lösemittel, die für das coil-coating-Verfahren verwendet werden sollen, mit Polyamidpulver versetzt. In der EP-OS 0 015 035 werden wasserverdünnbare Überzugsmittelzusammensetzungen auf Basis der bekannten Maleinatöle beschrieben. Die Überzugsmittelzusammensetzung enthält Epoxidgruppen tragende Verbindungen in fester Teilchenform, z.B. Epoxidharzpulver. Mit diesem System wird der Korrosionsschutz und die Steinschlagfestigkeit der lösemittelverdünnbaren Füller nicht erzielt.

Für die erfindungsgemäß einsetzbaren wasserverdünnbaren Füller können insbesondere Bindemittel bzw. Bindemittelsysteme eingesetzt werden, die bei der Verdünnung mit Wasser im Verarbeitungsbereich eine fast kontinuierlich abnehmende Viskosität zeigen, und keine Viskositätsanomalie aufweisen. Bei der Viskositätsanomalie erfolgt bei Wasserzusatz zunächst ein Viskositätsanstieg (Wasserberg), der dann plötzlich abfällt. Bindemittel oder Bindemittelsysteme ohne Viskositätsanomalie sind z.B. Hybrid-Systeme oder Polyelektrolyt-Nichtelektrolyt-Kondensate, wie sie z.B. in der AT-PS 328 587 beschrieben werden.

Ein bevorzugtes Beispiel für ein derartiges Bindemittel auf Hybrid-System -Basis, wie es in der AT-PS 32 85 87 beschrieben wird, ist ein Bindemittel, das 60 bis 90 Gew.-% eines Gemisches oder partiellen Kondensationsprodukts einer wasserlöslichen filmbildenden Polyhydroxylverbindung mit einer Säurezahl von unter 10 mg KOH/g unter Hydroxylzahl von 50 - 650 mg KOH/g und einer filmbildenden Polycarboxylverbindung mit einer Säurezahl von 30 - 280 mg KOH/g in einem molaren Verhältnis von Carboxylgruppen zu Hydroxylgruppen von 1 : 2 bis 1 : 25 mit partiell oder vollständig neutralisierten Carboxylgruppen und 10 - 40 Gew.-% eines mit Hydroxylgruppen umsetzbaren polyvalenten filmbildenden Kunstharzes ohne Polyelektrolytcharakter enthält, wobei sich die Gewichtsprozent jeweils auf den Festkörpergehalt des Bindemittels beziehen.

Geeignete filmbildenden Polyhydroxylverbindungen können in bekannter Weise hergestellt werden, beispielsweise durch Kondensation von Polyolen im Überschuß, wie Monoäthylenglykol, Diäthylenglykol, Triäethylenglykol,

Glycerin, Trimethylolpropan, Pentaerythrit, mit Polycarbonsäuren oder deren Anhydriden, wie Phthalsäure, Terephthalsäure, Trimellithsäure, Bernsteinsäure, Adipinsäure und Sebacinsäure, gegebenenfalls

unter anteiliger Mitverwendung von Monocarbonsäuren mit 5 bis 20 Kohlenstoffatomen. Eine andere Synthesemöglichkeit besteht in der Umsetzung von überschüssigem Polyol mit Diisocyanaten, z. B. Toluylendiisocyanat oder Hexamethylendiisocyanat. Gleichfalls geeignete Polyhydroxylverbindungen erhält man durch Copolymerisation $\alpha,\beta$-äthylenisch ungesättigter Verbindungen, die freie Hydroxylgruppen tragen, wie Äthylenglykolmonomethacrylsäureester, mit anderen copolymerisationsfähigen Vinylverbindungen, wie Estern der Acryl- bzw. Methacrylsäure von einwertigen Alkoholen, Amiden der Acryl-bzw. Methacrylsäure, Styrol, Vinyltoluol, und andern Monomeren, soweit sie keine Carboxylgruppen tragen. Die Copolymerisate können können auch geringe Mengen an Formaldehydkondensaten von Melamin, Harnstoff, Benzoguanamin, Phenolen, usw. einkondensiert enthalten.

Geeignete Polycarboxylverbindungen mit Säurezahlen von 30 bis 280 mg KOH/g sind beispielsweise herstellbar durch Umsetzung hydroxylreicher Präkondensate mit Di- oder Tricarbonsäureanhydriden, z. B. aus hydroxylreichen Polyestern oder Polyurethanen mit Phthalsäureanhydrid oder Trimellithsäureanhydrid. Bevorzugt sind die Additionsprodukte von dienophilen Verbindungen, z. B. Maleinsäureanhydrid, an ungesättigte Verbindungen mit Molekulargewichten von über 500. Dazu wählen die Ester natürlicher ungesättigter Fettsäuren und Harzsäuren mit Polyalkoholen, z. B. Glycerin, Pentaerythrit, oder mit epoxydgruppentragenden Verbindungen, wie Bisphenol-A-Glycidyläthern. Eine andere geeignete ungesättigte, ebenfalls additionsfähige Gruppe von Verbindungen sind Polymerisate von Dienen (Butadien, Isopren). Bei allen derartigen Additionsprodukten wird die Anhydridgruppierung vor der erfindungsgemäßen Verwendung als Polycarboxylverbindung entweder mit Wasser oder einwertigen Alkoholen aufgespalten. Darüber hinaus sind als PC auch die Copolymerisate der Acrylsäure bzw. Methacrylsäure mit andern $\alpha,\beta$-äthylenisch ungesättigten Monomeren, wie (Meth)acrylsäureestern, Styrol, Vinyltoluol verwendbar, bzw. auch selbstvernetzende Copolymerisate, wie sie in den österreichischen Patentschriften Nr. 291571 und Nr. 299543 beschrieben sind.

Die Carboxylgruppen der Polycarboxylverbindung werden partiell oder völlig neutralisiert. Hierzu geeignet sind anorganische Basen oder flüchtige Neutralisationsmittel, wie organische Basen, beispielsweise Stickstoffbasen, wie Ammoniak, aliphatische Amine oder aliphatische Alkanolamine. Beispiele hierfür sind Diethylamin, Triethylamin, N,N'-Dimethylethanolamin und Diethanolamin.

Die Kombination von Polyhydroxylverbindungen und Polycarboxylverbindungen kann durch einfaches Vermischen erfolgen. Gegebenenfalls kann auch eine partielle Kondensation der beiden Komponenten, beispielsweise bei Temperaturen von 80 bis 140 °C erfolgen. Hierdurch kann die Homogenität des Kombindationsprodukts erhöht werden. Die partielle Kondensation wird bis zu einem derartigen Ausmaß durchgeführt, daß die Löslichkeit in Wasser nicht verlorengeht; in den meisten Fällen wird die Säurezahl im Kondensationsprodukt um 8 bis 15 Einheiten gegenüber der Ausgangsmischung redudziert.

Als mit den Hydroxylgruppen umsetzbare polyvalente filmbildende Kunstharze werden solche ohne Polyelektrolytcharakter mitverwendet. Dies sind beispielsweise Kondensationsprodukte von Formaldehyd mit Harnstoff, Melamin, Benzoguanamin, Phenol, Kresol, Xylenol, p-tert.Butylphenol, gegebenenfalls veräthert mit einwertigen Alkoholen.

Die vorstehenden Kombinationsprodukte bilden bei Zusatz von Wasser eine Dispersion oder Emulsion, in der die wasserunlösliche Polyhydroxylkomponente durch die wasserlösliche Polycarboxylkomponente stabilisiert wird.

Ein Vorteil der erfindungsgemäßen Verwendung von Polymerpulvern ist die Möglichkeit, den applizierten wasserverdünnbaren Füller mit geringem Lösemittelgehalt bei Temperaturen einzubrennen, die für die allgemeine Industrielackierung und speziell für die Lackierung der Autokarossen üblich sind, um hervorragende Steinschlagfestigkeit, auch bei tiefen Temperaturen bis zu -30 °C, sehr guten Korrosionsschutz, ausgezeichnete Haftung und Zwischenhaftung zu erhalten, wobei als weitere Vorteile die größere Ergiebigkeit der Überzugsmittelzusammensetzung, die Einsparung von farbgebenden Pigmenten und die leichtere Entsorgung von Fehlansätzen durch Verbrennung mit wenig Rückstand zu erwähnen sind.

Der Teilchendurchmesser der verwendeten Pulver liegt im Bereich von 0,1 bis 100 µm. Er richtet sich nach der gewünschten Schichtdicke und wird so gewählt, daß er ausreichend klein ist, so daß im applizierten und eingebrannten Füller und auf dem auf diesen applizierten Lackfilm eine homogene und glatte Oberfläche erzielt wird. Eine rauhe unebene Oberfläche ergibt zwar häufig eine gute Haftung der Nachfolgeschichten, ist aber wegen der optischen Mängel oft nicht erwünscht. Teilchengrößen bis zu 100 µm sind insbesondere für Dickschichfüller geeignet, oder aber für solche Materialien, die einen gewissen. Anteil an Lösemitteln aufweisen, die eine Teilanlösung oder ein teilweises Anschmelzen der Teilchen beim Einbrennen bewirken, so daß eine Größenverringerung erfolgen kann. Im allgemeinen werden bevorzugt Teilchengrößen bis zu 10 µm und besonders bevorzugt bis zu 5 µm verwendet; die Untergrenze liegt bevorzugt bei etwa 1 µm. Die Teilchengrößenverteilung der eingesetzten Pulver ist in weiten Bereichen variabel. Durch Variation der Teilchengrößenverteilung können gegebenenfalls spezielle Eigenschaften, wie

z.B. die Rheologie, gezielt beeinflußt werden.

Die Polyamidpulver und/oder Polyacrylnitrilpulver werden der wäßrigen Füllermasse in Mengen bis zu maximal etwa 20 Gew.-%, bezogen auf die gesamte Zusammensetzung, zugesetzt. Die Untergrenze liegt bei 0,1 Gew.-%, bevorzugt 1 Gew.-% bezogen auf die gesamte Zusammensetzung der Füllermasse. Bevorzugt werden etwa 1 bis 10 Gew.% verwendet, wobei jedoch auch niedrigere Werte, insbesondere beim Einsatz von Polyamidpulvern, zu einer Steinschlagschutzverbesserung führen.

Die zur erfindungsgemäßen Verwendung geeigneten Polyacrylnitrilpulver können Homo- oder Copolymere sein; sie enthalten mindestens 70 bis 100 Gew.-% (bevorzugt über 90 Gew.-%) einpolymerisiertes Acrylnitril und/oder Methacrylnitril. Den Rest können ein oder mehrere Comonomere bilden. Beispiele sind Acrylsäureester und Methacrylsäureester von $C_1$ bis $C_{22}$-Alkoholen, wie Methylmethacrylat, Butylmethacrylat, Octylmethacrylat, Ethylacrylat, Isobutylacrylat, Acrylsäureester und Methacrylsäureester von perfluorierten $C_1$ bis $C_{22}$-Alkoholen, vinylaromatische Monomere mit bis zu 20 C-Atomen, z.B. Styrol, Vinyltoluol; Ester anderer ungesättigter Säuren, wie Maleinsäure- und Fumarsäureester von $C_1$ bis $C_{22}$-Alkoholen, Vinylmonomere, wie Vinylchlorid, Vinylether und Vinylester; und Mono- und Diolefine, wie Ethylen und Butadien.

Weiterhin können beispielsweise ungesättigte Carbon-, Sulfon- oder Phosphonsäuren und ihre Ester als Comonomere eingesetzt werden, wie Crotonsäure, Itaconsäure, Vinylsulfonsäure, Acrylamidopropylmethansulfonsäure, Vinylphosphonsäure und deren Ester. Zu den geeigneten Comonomeren gehören ebenfalls ungesättigte primäre, sekundäre und tertiäre Amine, wie z.B. Dimethylaminoneopentylmethacrylat, Dimethylaminoneopentylacrylat, 2-N-Morpholinoethylmethacrylat, 2-N-Morpholinoethylacrylat oder auch Amide der Acryl- und Methacrylsäure, wie z.B. Acrylamid, Dimethylmethacrylamid und Methylbutylacrylamid.

Zusätzlich können auch andere funktionelle Monomeren, die copolymerisierbar sind, eingesetzt werden. Sie können Hydroxy-, Silan- oder Epoxidgruppen enthalten, wie z.B. Vinyltrimethoxysilan, Vinyltributoxysilan, Methacryloxypropyltrimethoxysilan, Vinyltris(methoxyethoxy)silan, Vinyltriacetoxysilan, N-Methylolacrylamid, sowie dessen Alkylether, N-Methylolmethacrylamid und dessen Alkylether, Hydroxyethylmethacrylat, Hydroxybutylacrylat, Glycidylacrylat, Glycidylmethacrylat und Hydroxyethylacrylat.

Die Herstellung der Polyacrylnitrilpulver erfolgt nach üblichen Verfahren, die dem Fachmann bekannt sind. Beispiele sind die Suspensionspolymerisation und die Emulsionspolymerisation. Sie werden beispielsweise in "Chemische Technologie" von Winnacker-Küchler, Band 6, Organische Technologie 2, Karl Hanser-Verlag München-Wien 1982, beschrieben. Durch Wahl der entsprechenden Monomere können Eigenschaften der Polyacrylnitrilpulver beeinflußt werden, wie z.B. Glasübergangstemperatur und Schmelzverhalten. Die Teilchengrößenverteilung ist über das gewählte Herstellungsverfahren bzw. über die dabei benutzten Verfahrensparameter in der dem Fachmann geläufigen Weise beeinflußbar.

Die Auswahl der Monomeren, Comonomeren und der üblichen Hilfsstoffe erfolgt so, daß die Anforderungen an das Polyacrylnitrilpulver, wie Teilchendurchmesser, Glasübergangstemperatur, Molekulargewicht sowie Lösungsverhalten erreicht werden. Das Molekulargewicht ($\overline{M}w$) des pulverförmigen Polyacrylnitrils, welches erfindungsgemäß geeignet ist, liegt bei mindestens 100000. Nach der Herstellung können die Polyacrylnitrilpulver entweder in wäßriger Suspension, z.B. mit Pastenharz dispergiert/weiterverarbeitet werden, oder sie werden zu Pulvern getrocknet und dann gegebenenfalls nach weiterem Vermahlen zu dem erfindungsgemäßen Zweck eingesetzt.

Polyamidpulver, die erfindungsgemäß verwendet werden, können aus Aminocarbonsäuren mit beispielsweise 6 bis 12 C-Atomen pro Molekül oder deren Lactamen hergestellt werden, z.B. aus $\epsilon$-Caprolactam, $\omega$-Aminoundecansäure, Lauryllactam oder deren Gemische. Geeignet sind auch die Polykondensationsprodukte aus Diaminen, z.B. Hexamethylendiamin, und Dicarbonsäuren, z.B. Adipinsäure, Sebacinsäure, Dodecandicarbonsäure und Terephthalsäure. Verwendet werden können auch Gemische aus Diaminen und Dicarbonsäuren und Gemische aus Lactamen, Diaminen und Säuren.

Um Polyamide mit höherem Gehalt an funktionellen Gruppen zu erhalten, besteht die Möglichkeit, Säuren oder Amine mit höherer Funktionalität zu verwenden, z.B. Trimellithsäure oder deren Anhydrid sowie Diethylentriamin.

Bei der Herstellung des Polyamids ist es bevorzugt, wenn mindestens 70 % der umsetzbaren Carboxylgruppen in Amidgruppen überführt werden. Weitere Umsetzungsmöglichkeiten bestehen z.B. in der Bildung von Estergruppen. Die Polyamide können durch Polyethersegmente in ihren Eigenschaften verändert werden, z.B. um Flexibilisierung zu erreichen.

In diesem Sinne zählen auch Polyesteramide und Copolyetheramide zu den Polyamiden, wenn mindestens 70 % der umsetzbaren Carboxylgruppen in Amidgruppen umgesetzt wurden.

Die technische Herstellung der Polyamide kann durch Polykondensation von Diaminen, bzw. Polyaminen mit Dicarbonsäuren, bzw. Polycarbonsäuren, durch Polykondensation von $\omega$-Aminocarbonsäuren oder durch ringöffnende Polymerisation von Lactamen erfolgen. Die Herstellung kann in der Schmelze oder in

Lösung durchgeführt werden. Während oder nach der Lösungspolymerisation kann das Polyamid gegebenenfalls in feinpulvriger Form vorliegen.

Das Zahlenmittel der Molmasse der verwendbaren Polyamide liegt bevorzugt über 500 g/mol, bevorzugt über 3000 g/mol. Die Polyamide enthalten pro Molekül mindestens 10, bevorzugt mindestens 15 Amidgruppen. Geeignete Polyamid-Pulver sind z.B. unter den Handelsbezeichnungen Orgasol (eingetragenes Warenzeichen) und Rilsan (eingetragenes Warenzeichen) von der Firma ATO-Chemie erhältlich.

Die verwendeten Polyacrylnitril- und Polyamidpulver sollen im eingesetzten Bindemittel, Anreibeharz oder Lösungsmittel bei Temperaturen bis zu 80 °C nicht schmelzen, sowie nicht angelöst oder angequollen werden. Unter Anwendungs- und Herstellungs-Bedingungen sollen sie also unverändert vorliegen. Während des Einbrennens sollen sie nicht oder zumindest nicht vollständig schmelzen oder gelöst werden.

Die Oberfläche der Pulver kann frei von ionischen Gruppen sein, aber sie kann auch ionische Gruppen bzw. saure oder basische Gruppen enthalten, um z.B. verbesserte Dispersionsstabilität oder andere erwünschte Eigenschaften zu erhalten.

Die erfindungsgemäß eingesetzten Polyacrylnitril- und/oder Polyamidpulver können zusammen mit üblichen Füllstoffen und/oder Pigmenten eingesetzt werden. Als Füllstoffe können beispielsweise solche verwendet werden, die auf dem Gebiet der Herstellung von Füllermassen üblich sind und solchen in gewissem Maße auch Masse verleihen. Es kann sich beispielsweise um anorganische Pigmente und Füllstoffe handeln, z. B. Ruß, Titandioxid, feindisperses Siliciumdioxid, Aluminiumsilikat (z. B. Kaolin), Magnesiumsilicat (z. B. Talkum), Calciumcarbonat (z. B. Kreide), Bariumsulfat (z. B. Schwerspat), und verschiedene Pigmente, wie auch Metalleffektpigmente. Es können auch organische und anorganische Farbpigmente, Korrosionsschutzpigmente, wie Blei- und Chromatverbindungen, zusätzlich eingesetzt werden.

Werden neben den erfindungsgemäß verwendeten Polyacrylnitril- und/oder Polyamidpulvern weitere Füllstoffe, insbesondere anorganische Füllstoffe und/oder Pigmente, wie anorganische und organische Pigmente, verwendet, so liegt bevorzugt der Anteil an Polyamid- und/oder Polyacrylnitrilpulver bei 5 bis 100 Vol.-%, besonders bevorzugt bei 5 bis 60 Vol.-% der Summe der Volumina von Füllstoffen, Pigmenten sowie Polyamid- und Polyacrylnitrilpulver.

Die in den erfindungsgemäßen Füllermassen eingesetzten Polyamid- und/oder Polyacrylnitrilpulver, Füllstoffe und/oder Pigmente können in mit einem Kunstharz angeriebener Form als wäßrige und/oder lösemittelhaltige Pigmentpasten eingesetzt werden. Derartige Pigmentpasten sind z.B. herstellbar, indem man Pigmentanreibeharze, gegebenenfalls mit einer zur Neutralisation notwendigen Menge Neutralisationsmittel und weiteren Hilfsstoffen, wie z.B. Netzmittel oder Lösungsmittel, versetzt, mit Wasser (insbesondere vollentsalztem Wasser) in eine dünnviskose wäßrige Dispersion überführt, und dann mit einem schnellaufenden Rührlaufwerk die Pigmente einarbeitet.Es ist auch möglich, einen Anteil des filmbildenden Harzes als Pastenharz einzusetzen. Gemäß einer bevorzugten Herstellungsart wird niedrigmolekulares praktisch 100%iges Melaminharz als Pastenharz, z.B. Hexamethoxymethylmelamin in Lösemittel gelöst und nach Zugabe von gegebenenfalls Netzmitteln, Wasser und den anzureibenden Pulvern, in einem Mahlaggregat, z.B. einer Perlmühle, vermahlen. Die Pulver können allein und in Kombination vermahlen werden.

Eine weitere Herstellungsmöglichkeit für die angeriebenen Pasten besteht in der Verwendung von lösemittelfreien oder lösemittelarmen Dispersionen zur Vermahlung der Pulver.

Die erhaltenen Pasten werden entweder ohne weitere Zusätze oder nach Zugabe der Bindemittel, gegebenenfalls in gelöster Form, in der Form wäßriger Dispersionen und/oder nach Zusatz weiterer Zusatzstoffe, mit Wasser verdünnt.

Der erfindungsgemäß hergestellte Füller wird nach einer weiteren Ausführungsform der Erfindung auf eine KTL-Beschichtung (kathodisch abgeschiedene Elektrotauchlack-Beschichtung) appliziert, deren Bindemittel-Vernetzer-Zusammensetzung vor dem Einbrennen bevorzugt mindestens 25 Gew.-% Aminoepoxidharz auf Basis Bisphenol A enthält. Bei Fremdvernetzung enthält es zusätzlich mindestens 15 Gew.-% blockiertes Polyisocyanat. Die Gew.-% beziehen sich jeweils auf den Bindemittel-Vernetzer-Festkörpergehalt. Das blockierte Polyisocyanat enthält mindestens 8 Gew.-% latente Isocyanatgruppen. Bei Selbstvernetzung soll das Bindemittel mindestens 1,2 % latente Isocyanatgruppen enthalten. Liegen ein oder mehrere selbstvernetzende Bindemittel und zusätzliche blockierte Isocyanate vor, so beträgt der Mindestgehalt an latenten Isocyanatgruppen 1,2 %, berechnet auf Bindemittel-Vernetzer-Zusammensetzung.

Das Amino-Epoxidharz soll mindestens 65 % Bisphenol A-Segmente enthalten (molare Masse eines Bisphenol A-Segementes ist 226 g/mol). Die Zusammenmsetzungen der KTL-Überzugsmittel und ihre Applikation sind aus Literatur und veröffentlichten Patentanmeldungen bekannt. Die erfindungsgemäß geeigneten KTL-Überzugsmittelzusammensetzungen bestehen aus hydroxylgruppenhaltigen Aminoepoxidharzen, die aus Bisphenol A-Polyglycidylethern mit mindestens einer, bevorzugt mindestens zwei, 1,2-Epoxidgruppen pro Molekül hergestellt werden. Bevorzugt sind 1,2-epoxidgruppenhaltige Polyglycidylether

der allgemeinen Formel:

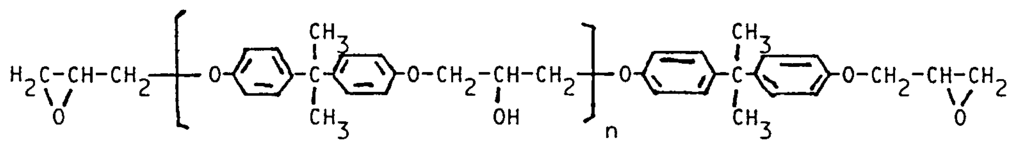

Das Einführen der Aminogruppen in die 1,2-epoxidgruppenhaltigen Polyglycidylether erfolgt entweder durch Addition von NH-reaktiven Verbindungen mit den Epoxidgruppen oder durch Umsetzung der Hydroxylgruppen mit basischen Monoisocyanaten, die durch Reaktion von aromatischen und/oder aliphatischen und/oder cycloaliphatischen Di- oder Polyisocyanaten mit Dialkylaminoalkanolen (wie z. B. in der veröffentlichten deutschen Patentanmeldung 27 07 405 beschrieben) erhalten wurden.

Als NH-reaktive Verbindungen werden verwendet primäre Monoalkylamine wie Dialkylaminoalkylamin und/oder sekundäre Monoamine wie Dialkylamine, Monoalkylhydroxylamine oder Dihydroxyalkylamine und/oder Diketimine. Beispiele für einsetzbare Verbindungen sind das Diethylentriamin-Diketimin, Diethylamin, Dimethylaminopropylamin, N-Methylaminoethanol und/oder Diethanolamin. Bei Verwendung von primären Aminen oder sekundären Diaminen tritt eine Kettenverlängerung ein, z.B. bei Einsatz der Additionsprodukte von 1 mol Hexandiamin-1,6 mit 2 mol Glycidylester der Versaticsäure.

Das Zahlenmittel der Molmasse ($\overline{M}n$) der Aminoepoxidharze liegt bei 400 bis 10000 g/mol, bevorzugt bei 1000 bis 5000 g/mol.

Weitere KTL-Bindemittel können in Kombination oder in Präkondensation mit den Aminoepoxidharzen auf Bisphenol A-Basis verwendet werden, wie z.B. Amino-epoxidharze auf Bisphenol F-Basis und/oder auf Novolak-Basis, Aminoepoxidharze mit endständigen Doppelbindungen, Aminopolyurethanharze, Mannichbasen auf Basis Bisphenol A, reaktivem Amin und Formaldehyd, aminogruppenhaltige Polybutadienharze, modifizierte Epoxid-Kohlendioxid-Umsetzungsprodukte (wie beispielsweise.in DE-A-36 44 370, EP-A-234 395 beschrieben) oder mit Epoxidharz modifizierte Mannichbasen (wie beispielsweise in EP-A-209 857, EP-A-227 975 beschrieben).

Außerdem können Aminogruppen enthaltende Acrylatharze (wie beispielsweise in DE-A-36 28 121 beschrieben) mitverwendet werden, wobei jedoch zu beachten ist, daß sich je nach Art und Menge des Zusatzes manche Eigenschaften verschlechtern können, wie z.B. Zwischenhaftung oder Steinschlagresistenz.

Die Kombinationsharze oder Präkondensationsharze können ebenso wie das Aminoepoxidharz auf Bisphenol A-Basis primäre, sekundäre und/oder tertiäre Aminogruppen oder quaternäre Ammoniumgruppen tragen, aber auch Sulfonium- und/oder Phosphoniumgruppen. Sie können aber auch frei von basischen Gruppen sein. Die Menge der Bindemittel ohne basische Gruppen darf natürlich nicht so groß sein, daß sie in wäßriger Dispersion separieren. Andererseits ist es durchaus möglich, wenn die emulgierende Kraft des teilneutralisierten Bindemittels mit basischen Gruppen genügend groß ist, daß bis zu 60 bis 70 % der zugesetzten Bindemittel, Weichmacher, Vernetzer usw. ohne basische Gruppen stabil dispergiert bleiben. Meistens liegt deren Menge unter 30 %.

Als Isocyanatvernetzer werden blockierte Diisocyanate und/oder Polyisocyanate verwendet. Als Beispiele für Isocyanate, die in blockierter Form und gegebenenfalls in Form von blockierten Prepolymeren verwendbar sind, werden genannt: Ethylen-, Propylen-, Tetramethylen-, Hexamethylen-, Decamethylen-, Dodecamethylendiisocyanat, 2,4,4-Trimethylhexamethylen-1,6-diisocyanat, Phenylen-, Toluylen, Naphthylendiisocyanat, 4,4-Methylen-bis(phenylisocyanat),4,4'-Ethylen-bis(phenylisocyanat), ω,ω'-Diisocyanat-1,3-dimethylbenzol (m-Xylylendiisocyanat), ω,ω'-Diisocyanat-1,4-dimethylbenzol, ω,ω'-Diisocyanat-1,3-dimethylcyclohexan, 1-Methyl-2,4-diisocyanatcyclohexan, 4,4'-Methylen-bis(cyclohexylisocyanat), 4,4'-Ethylen-bis-(cyclohexylisocyanat), 3-Isocyanat-methyl-3,5,5-trimethyl-cyclohexyl-isocyanat, dimeres Säurediisocyanat, ω,ω'-Diisocyanat-diethylbenzol, ω,ω'-Diisocyanat-dimethyltoluol, ω,ω'-Diisocyanat-diethyltoluol, Fumarsäure-di(2-isocyanatethyl) und Triphenylmethan-triisocyanat.

Als Präpolymere können Umsetzungsprodukte aus überschüssigem Di- oder Polyisocyanat mit niedrigmolekularem Polyol verwendet werden, wie z.B. mit Ethylenglykol, Propylenglykol, 1,3-Butylenglykol, 1,3-Butylenglykol, Neopentylglykol, 2,2,4-Trimethyl-1,3-pentandiol, Hexamethylenglykol, Cyclohexandimethanol, hydriertes Bisphenol A, Trimethylolpropan, Trimethylolethan, 1,2,6-Hexantriol, Glycerin, Sorbit, Succrose, Pentaerythrit.

Vorteilhaft kann die Verwendung von Isocyanat-Präpolymeren sein, die substituierte Harnstoffgruppen enthalten.

Aus den Di- oder Polyisocyanaten kann man auch solche mit einer Biuretstruktur oder eine Allophanatstruktur in blockierter Form anwenden.

Als Blockierungsmittel kommen die bekannten Substanzen auf der Basis eines Phenols, Lactams, aktive Methylengruppen enthaltende Verbindung, eines Alkohols, Mercaptans, Hydroxyalkylacrylats, Hydroxyalkylmethacrylats, Amids, Imids, Amins, tert. Alkanolamins, Imins, Oxims, oder Sulfits in Frage. Beispiele für Blockierungsmittel sind: Phenol, Kresol, Xylenol, Nitrophenol, Ethylphenol, tert. Butylphenol, 2,5-Di-tert.-butyl-4-hydroxytoluol, $\epsilon$-Caprolactam, $\delta$-Valerolactam, $\gamma$-Butyrolactam, $\beta$-Propiolactam, Acetylaceton, Methanol, Ethanol, Propanol, Butanol, Amylalkohol, Laurylalkohol, 2-Methoxyethanol, 2-Ethoxyethanol, 2-Butoxyethanol, Diethylenglykolmonomethyl-, -monoethylether, Methoxypropanol, Methoxymethanol, Furfurylalkohol, 2-Ethylhexanol, Hydroxyethylacrylat, Hydroxyethylmethacrylat, Hydroxypropylmethacrylat, Hydroxypropylacrylat, Diphenylamin, Butylamin, Dibutylamin, Dimethylethanolamin, Diethylethanolamin, Imidazol, 2-Ethylimidazol, Harnstoff, Thioharnstoff, Ethylenharnstoff, 1,3-Diphenylharnstoff, Phenylester der N-Phenylcarbaminsäure, 2-Oxazolidin, Ethylenimin, Formaldoxim, Acetaldoxim, Acetoxim, Methylethylketoxim, Methylisobutylketoxim, Diacetylmonoxim, Benzophenonoxim, Cyclohexanonoxim, Kaliumbisulfit, Natriumbisulfit.

Blockierte Isocyanate im Sinne der Erfindung reagieren im wesentlichen unter Einbrennbedingungen mit reaktiven Hydroxylgruppen zu Urethangruppen und mit reaktiven Aminen zu substituierten Harnstoffgruppen. Nicht gemeint sind die Di- und Polyisocyanate, welche unter den Einbrennbedingungen zu einem wesentlichen Teil als Umesterungs- und Umamidierungsvernetzer reagieren, wie z.B. die mit Malonester oder Acetessigester umgesetzten Isocyanate. Diese Vernetzer und auch alle anderen verwendbaren Vernetzer können gegebenenfalls zusätzlich verwendet werden, wie z.B. weitere Umesterungs- und Umamidierungsvernetzer, Triazin-Formaldehyd-Harze, Harnstoff-Formaldehyd-Harze, Phenol-Formaldehyd-Harze, Phenolallylether-Formaldehydharze, acetalfunktionelle Vernetzer und Harnstoffkondensationsprodukte (wie z. B. in DE-A-33 25 061 beschrieben). Zur Herstellung selbstvernetzender KTL-Bindemittel werden die Di- oder Polyisocyanate partiell blockiert und die verbleibenden freien Isocyanatgruppen läßt man mit den reaktiven Hydroxylgruppen und/oder den reaktiven Aminogruppen reagieren.

Die Herstellung der KTL-Beschichtungsbäder und der Nachfüllmaterialien ist hinreichend bekannt. Die Bindemittel mit basischen Gruppen werden mit geeigneten Säuren teilneutralisiert und in Wasser dispergiert. Das KTL-Beschichtungsbad enthält gegebenenfalls Pigmente, Füllstoffe, Weichmacher, Additive, Katalysatoren, organische Lösungsmittel, organische Pulver bzw. Mikroteilchen usw.

Die Beschichtung von leitenden Oberflächen kann unter bekannten Bedingungen der Elektrotauchlackierung durchgeführt werden. Der Füller wird auf KTL-Beschichtung naß auf naß, oder nach Trocknen der KTL-Beschichtung, gegebenenfalls durch Erwärmen oder nach dem Einbrennen appliziert. Die Schichtdicke der KTL-Beschichtung kann in üblichen Bereichen, z.B. bei 10 bis 50 $\mu$m gehalten werden. Der Füller wird bevorzugt in Schichtdicken von 15 bis 60 $\mu$m aufgetragen.

Auf die Füllerschicht kann naß in naß, nach dem Ablüften gegebenenfalls durch Erwärmen oder nach dem Einbrennen ein üblicher wasserverdünnbarer oder lösungsmittelverdünnbarer Uni-Lack oder Effektlack, z.B. Metalleffekt-Lack oder Perlglanz-Effektlack aufgebracht und ebenfalls naß in naß oder nach dem Ablüften gegebenenfalls durch Erwärmen oder nach dem Einbrennen ein üblicher transparenter wasserverdünnbarer oder lösungsmittelverdünnbarer Lack oder ein transparenter Pulverlack appliziert werden.

Durch die erfindungsgemäß bereitgestellten Füllermassen sowie das erfindungsgemäße Verfahren wird es möglich steinschlagresistente Füller- oder Zwischenschichten in Mehrschichtlackierungen zu erstellen. Derartige Füller- und Zwischenschichten sind besonders geeignet auf dem Kraftfahrzeugsektor. Sie können bei der Neuerstellung sowie bei der Reparatur von Mehrschichtaufbauten eingesetzt werden. Die eingesetzten Füllermassen weisen einen sehr geringen Gehalt an organischen Lösemitteln auf und ergeben sowohl eine ausgezeichnete Steinschlagresistenz, als auch einen hervorragenden Korrosionsschutz. Duch den geringen Lösungsmittelgehalt werden Emmissionen stark verringert.

Die folgenden Beispiele dienen zur Erläuterung der Erfindung. In den Beispielen werden folgende Rohstoffe verwendet:

Handelsübliches Polyacrylnitrilpulver mit einem Gehalt von ca. 7 % Acrylsäuremethylester, mit einer Tg (nach DSC, DSC = Differtial Scanning Calorimetry) von über 90 °C, einem Molekulargewicht von > 100000 und einer mittleren Korngröße $D_{50}$ = 10 $\mu$m (Korngrößenhauptbereich : 1,5 - 16 $\mu$m).

Polyamid 612-Pulver:

Schmelzbereich : 135 - 160 °C (gemessen mit DSC = Differential Scanning Calorimetry)
Zahlenmittel des Molekulargewichtes: 3590 g/mol, gemessen mittels Dampfdruckosmose, 120 °C, DMF
mittlere Korngröße $D_{50}$ = 11 $\mu$m (Korngrößenhauptbereich: 5-20 $\mu$m).

Handelsübliches Alkydharz, wasserverdünnbares, fettsäuremodifiziert (Resydrol VWA 5477, Hersteller Hoechst AG, freiverkäuflich)
FK 35%
OH-Zahl: 197 mg KOH/1g Festkörper
Säurezahl: 43 mg KOH/1g Festkörper
Molekulargewicht (GPC: Gelpermeationschromatographie) bezogen auf
Polystyrol in THF;
Gewichtsmittel des Molekulargewichtes $M_W$ = 15500
Zahlenmittel des Molekulargewichtes $M_n$ = 2300
Polydispersität: $D = M_w / M_n = 6,7$.

In den Beispielen werden steinschlagfeste organische Hydrofüller hergestellt:

Beispiel 1

26,95 g Hexamethoxymethylmelamin-Harz (HMMM) werden vorgelegt und unter Rühren sukzessiv mit 56,74 g Dipropylenglykolmonometylether, mit 8,98 g eines handelsüblichen, polyfunktionalen Netzmittels und 70,92 g vollentsalztem Wasser versetzt.

Anschließen werden 47,28 g Polyacrylnitrilpulver, 18,91 Benzoin und 23,64 g Polyamid 612-Pulver unter Rühren eingestreut. Der Mahlansatz wird 15 min unter einem schnell rührenden Dissolver vordispergiert und dann in einer Perlmühle 60 min lang vermahlen. Dabei sollte eine Temperatur von 40 °C nicht überschritten werden.

Zum abgekühlten Mahlgut werden langsam unter Rühren 718,20 g Alkydharz und 28,37 g vollentsalztes Wasser zugefügt.

Festkörpergehalt : 37,17 %
Pigment-Volumen-Konzentration : 19,2 %
High-Solid-Wert : 80,2 %
Steinschlag-Prüfung : Multischlag VDA Prüfblatt 621-427
(Methode A, 1 bar/2*500g) Kennwert: 1
Einzelschlag DIN 55995: Verfahren A, Gerät: Modell 490 Fa. Erichsen
+20 °C < 2 $mm^2$, leichte Decklackenthaftung
-20 °C < 2 $mm^2$, leichte Decklackenthaftung

Beispiel 2

29,24 g Hexamethoxymethylmelamin-Harz (HMMM) werden vorgelegt und unter Rühren sukzessiv mit 55,80 g Dipropylenglykolmonomethylether, mit 9,33 g eines handelsüblichen, polyfunktionalen Netzmittels und 53,10 g vollentsalztem Wasser versetzt.

Anschließend werden 74,84 g Polyacrylnitrilpulver unter Rühren eingestreut. Der Mahlansatz wird 15 min unter einem schnell rührenden Dissolver vordispergiert und dann in einer Perlmühle 60 min lang vermahlen. Dabei sollte eine Temperatur von 40 °C nicht überschritten werden.

Zum abgekühlen Mahlgut werden langsam unter Rühren 750,65 g Alkydharz und 27,03 g vollentsalztes Wasser zugefügt.

Festkörpergehalt : 37,0 %
Pigment-Volumen-Konzentration : 19,45 %
High-Solid-Wert : 80,0 %
Steinschlag-Prüfung: Multischlag VDA Prüfblatt 621-427
(Methode A, 1 bar/2*500g) Kennwert: 1
Einzelschlag DIN 55995: Verfahren A, Gerät: Modell 490 Fa. Erichsen
+20 °C < 2 $mm^2$ , Decklackenthaftung
-20 °C < 2 $mm^2$ , Decklackenthaftung

Beispiel 3

26,11 g Hexamethoxymethylmelamin-Harz (HMMM) werden vorgelegt und unter Rühren sukzessiv mit 50,39 g Dipropylenglykolmonometylether, mit 8,70 g eines handelsüblichen, polyfunktionalen Netzmittels und 122,77 g vollentsalztem Wasser versetzt.

Anschließend werden 68,71 g Polyamid 612-Pulver unter Rühren eingestreut. Der Mahlansatz wird 15 min unter einem schnell rührenden Dissolver vordispergiert und dann in einer Perlmühle 60 min lang

vermahlen. Dabei sollte eine Temperatur von 40 °C nicht überschritten werden.

Zum abgekühlten Mahlgut werden langsam unter Rühren 695,83 g Alkydharz und 27,49 g vollentsalztes Wasser zugefügt.

Festkörpergehalt : 34,2 %
Pigment-Volument-Konzentration : 21,42 %
High-Solid-Wert : 80,2 %
Steinschlag-Prüfung : Multischlag VDA Prüfblatt 621-427
(Methode A, 1 bar/2*500g) Kennwert: 1
Einzelschlag DIN 55995: Verfahren A, Gerät: Modell 490 Fa. Erichsen
+20 °C < 2 $mm^2$
-20 °C < 2 $mm^2$ , Enthaftung Füller/KTL

Beispiel 4

24,56 Hexamethoxymethylmelamin-Harz (HMMM) werden vorgelegt und unter Rühren sukzessiv mit 28,12 g Dipropylenglykolmonometylether, mit 9,81 g eines handelsüblichen, polyfunktionalen Netzmittels und 40,17 g vollentsalztem Wasser versetzt.

Anschließend werden 11,25 g Polyamid 612-Pulver, 63,81 g Bariumsulfat, 135,86 g Titandioxid und 31,93 g Talkum unter Rühren eingestreut. Der Mahlansatz wird 15 min unter einem schnell rührenden Dissolver vordispergiert und dann in einer Perlmühle 60 min lang vermahlen. Dabei sollte eine Temperatur von 40 °C nicht überschritten werden. Zum abgekühlten Mahlgut werden langsam unter Rühren 654,50 g Alkydharz zugefügt.

Festkörpergehalt : 50,1 %
Pigment-Volument-Konzentration : 23,0 %
High-Solid-Wert : 89,2 %
Steinschlag-Prüfung: Multischlag VDA Prüfblatt 621-427
(Methode A, 1 bar/2*500g) Kennwert: 1
Einzelschlag DIN 55995: Verfahren A, Gerät: Modell 490 Fa. Erichsen
+20 °C < 2 $mm^2$ Decklackenthaftung
-20 °C < 2 $mm^2$ Decklackenthaftung

**Patentansprüche**

1. Verfahren zur Herstellung einer steinschlagresistenten Mehrschichtlackierung auf elektrisch leitfähigen Substraten durch Auftrag einer Grundierung durch kathodische Elektroabscheidung aus einem wäßrigen Überzugsmittel und anschließend naß-in-naß, nach dem Ablüften oder Einbrennen Auftrag einer Füllerschicht aus einer wäßrigen Füllermasse, enthaltend ein oder mehrere wasserverdünnbare, bei Temperaturen bis zu 180 °C härtbare Bindemittel, und Aufbringen, naß-in-naß, nach dem Ablüften oder Einbrennen von einer oder mehreren Basis- und Decklackschichten,
**dadurch gekennzeichnet,** daß man eine wäßrige Füllermasse verwendet, die ein wasserverdünnbares Bindemittel auf der Basis von Hydroxylgruppen enthaltenden Polycarboxylverbindungen und eines oder mehrerer mit Hydroxylgruppen umsetzbarer polyvalenter filmbildender Kunstharze enthält, und die 0,1 bis 20 Gew.-%, bezogen auf die gesamte wäßrige Füllermasse, Polyamidpulver, Polyacrylnitrilpulver oder Gemische davon mit Teilchendurchmessern aus dem Bereich von 0,1 bis 100 µm enthält, wobei der High-Solid-Wert der wäßrigen Füllermasse nicht unter 75 Gew.-% liegt.

2. Verfahren nach Anspruch 1, dadurch gekennzeichnet, daß man eine wäßrige Füllermasse verwendet, die zusätzlich Pigmente und/oder anorganische Füllstoffe enthält.

3. Verfahren nach Anspruch 2, dadurch gekennzeichnet, daß man eine wäßrige Füllermasse verwendet, in der das Polyamid- und/oder Polyacrylnitrilpulver 5 bis 100 Vol.-% der Summe der Volumen von anorganischen Füllstoffen, Pigmenten und Polyamid- und Polyacrylnitrilpulver beträgt.

4. Verfahren nach Anspruch 2 oder 3, dadurch gekennzeichnet, daß man eine wäßrige Füllermasse verwendet, in der die Polyamidpulver und/oder Polyacrylnitrilpulver bei Temperaturen bis zu 80 °C weder schmelzen, noch angelöst oder angequollen werden.

5. Verfahren nach einem der Ansprüche 1 bis 4, dadurch gekennzeichnet, daß man ein Bindemittel verwendet, das 60 bis 90 Gew.-% eines Gemisches oder partiellen Kondensationsprodukts einer wasserunlöslichen filmbildenden Polyhydroxylverbindung mit einer Säurezahl von unter 10 mg KOH/g und einer Hydroxylzahl von 50 - 650 mg KOH/g und einer filmbildenden Polycarboxylverbindung mit einer Säurezahl von 30 - 280 mg KOH/g in einem molaren Verhältnis von Carboxylgruppen zu Hydroxylgruppen von 1 : 2 bis 1 : 25, mit partiell oder vollständig neutralisierten Carboxylgruppen und 10 - 40 Gew.-% eines mit Hydroxylgruppen umsetzbaren polyvalenten filmbildenden Kunstharzes ohne Polyelektrolytcharakter, wobei sich die Gew.-% jeweils auf den Festkörpergehalt beziehen, und Wasser enthält.

6. Verfahren nach einem der Ansprüche 1 bis 5, dadurch gekennzeichnet, daß man ein Bindemittel verwendet, das eine Polydispersität (D = Mw/Mn) von > 3,5 aufweist.

7. Verfahren nach einem der Ansprüche 1 bis 6, dadurch gekennzeichnet, daß ein wäßriges Bindemittel verwendet wird, das mit Wasser auf einen Harzfestkörpergehalt von 35 - 60 Gew.-% verdünnt wurde.

8. Verfahren nach einem der Ansprüche 1 bis 7, dadurch gekennzeichnet, daß man ein wäßriges Bindemittel verwendet, in dem die filmbildende Polycarboxylverbindung Additionsprodukte von Maleinsäureanhydrid an ungesättigter Fettsäureester sind.

9. Verfahren nach einem der Ansprüche 1 bis 8, dadurch gekennzeichnet, daß man ein wäßriges Bindemittel verwendet, in dem die wasserunlösliche filmbildende Polyhydroxyverbindung Ester von Dicarbonsäuren mit Polyolen sind.

10. Verfahren nach einem der Ansprüche 1 bis 9, dadurch gekennzeichnet, daß man ein wäßriges Bindemittel verwendet, in dem das polyvalente filmbildende Kunstharz ohne Polyelektrolytcharakter ein Melaminharz, bevorzugt Hexamethoxymethylmelamin, ist.

11. Verfahren nach einem der vorhergehenden Ansprüche, dadurch gekennzeichnet, daß man eine wäßrige Füllermasse verwendet, in der die Pulver mit einem Pastenharz, insbesondere einem Melaminharz als Pastenharz angerieben wurden.

12. Verfahren nach einem der vorhergehenden Ansprüche, dadurch gekennzeichnet, daß es zur Lackierung von Kraftfahrzeugteilen durchgeführt wird.

13. Verfahren nach einem der vorhergehenden Ansprüche, dadurch gekennzeichnet, daß man die Grundierung durch kathodische Elektroabscheidung aus einem wäßrigen Überzugsmittel aus einem selbstvernetzenden oder fremdvernetzenden Aminogruppen enthaltenden Epoxidharz auf der Basis von Bisphenol A mit einem Gehalt von mindestens 65 Mol.-% auf Bisphenol A basierenden Einheiten, abscheidet.

14. Verfahren nach Anspruch 13, dadurch gekennzeichnet, daß man zur Selbstvernetzung ein Aminogruppen enthaltendes Epoxidharz verwendet, das 1,2 Mol.-% blockierte Isocyanatgruppen aufweist.

15. Verfahren nach Anspruch 14, dadurch gekennzeichnet, daß man zur Fremdvernetzung zusätzlich mit mindestens 15 % blockiertem Polyisocyanat arbeitet, das mindestens 8 Mol % blockierte Isocyanatgruppen enthält.

16. Wäßrige Füllermasse zur Herstellung von steinschlagfesten Mehrschichtlackierungen, enthaltend ein oder mehrere wasserverdünnbare, bei Temperaturen bis zu 180 °C härtbare Bindemittel auf der Basis von Hydroxylgruppen enthaltenden Polycarboxylverbindungen und eines oder mehrerer mit Hydroxylgruppen umsetzbarer polyvalenter filmbildender Kunstharze, sowie 0,1 - 20 Gew.-% bezogen auf die gesamte wäßrige Füllermasse, Polyamidpulver oder Gemische von Polyamidpulver und Polyacrylnitrilpulver mit Teilchendurchmessern aus dem Bereich von 0,1 - 100 µm, wobei der High-Solid-Wert der Füllermasse nicht unter 75 Gew.-% liegt.

17. Wäßrige Füllermasse nach Anspruch 16, enthaltend ein Bindemittel, das 60 - 90 Gew.-% eines Gemisches oder partiellen Kondensationsprodukts einer wasserunlöslichen filmbildenden Polyhydroxylverbindung mit einer Säurezahl von unter 10 mg KOH/g und einer Hydroxylzahl von 50 - 650 mg

KOH/g und einer filmbildenden Polycarboxylverbindung mit einer Säurezahl von 30 - 280 mg KOH/g in einem molaren Verhältnis von Carboxylgruppen zu Hydroxylgruppen von 1 : 2 bis 1 : 25, mit partiell oder vollständig neutralisierten Carboxylgruppen und 10 - 40 Gew.-% eines mit Hydroxylgruppen umsetzbaren polyvalenten filmbildenden Harzes, ohne Polyelektrolytgehaltcharakter, wobei sich die Gew.-% jeweils auf den Festkörpergehalt beziehen.

**18.** Wäßrige Füllermasse nach Anspruch 16 oder 17, dadurch gekennzeichnet, daß sie zusätzlich anorganische Füllstoffe und/oder Pigmente enthält.

**19.** Wäßrige Füllermasse nach Anspruch 18, dadurch gekennzeichnet, daß sie 5 bis 60 Vol.-% Polyamidpulver oder Gemische von Polyamidpulver und Polyacrylnitrilpulver, bezogen auf die Summe von anorganischen Füllstoffen, Pigmenten, Polyamidpulver und Polyacrylnitrilpulver, enthält.

**20.** Verwendung der wäßrigen Füllermassen gemäß einem der Ansprüche 16 bis 19 zur Herstellung von steinschlagresistenten Überzügen.

**21.** Verwendung nach Anspruch 20 zur Herstellung von steinschlagresistenten Füller- oder Zwischenschichten bei Mehrschichtlackierungen.

**22.** Verwendung nach Anspruch 20 oder 21 bei der Lackierung von Kraftfahrzeugen und deren Teilen.

**Claims**

**1.** A process for producing a stone impact-resistant multilayer coating on electrically conducting substrates by the application of a primer by cathodic electrodeposition from an aqueous coating medium and the subsequent wet-in-wet application, after airing-off or stoving, of a filler coat comprising an aqueous filler material containing one or more water-thinnable binder vehicles which can be hardened at temperatures up to 180 °C, and the application, wet-in-wet, after airing-off or stoving, of one or more base and covering lacquer coats, characterised in that an aqueous filler material is used which contains a water-thinnable binder vehicle based on polycarboxyl compounds containing hydroxyl groups and one or more polyvalent film-forming synthetic resins which are capable of reacting with hydroxyl groups, and which contains 0.1 to 20 % by weight, with respect to the total aqueous filler material, of polyamide powder, polyacrylonitrile powder or mixtures thereof having particle diameters in the range from 0.1 to 100 µm, wherein the high-solid value of the aqueous filler material is not less than 75 % by weight.

**2.** A process according to claim 1, characterised in that an aqueous filler material is used which additionally contains pigments and/or inorganic fillers.

**3.** A process according to claim 2, characterised in that an aqueous filler material is used in which the amount of polyamide and/or polyacrylonitrile powder is 5 to 100 % by volume of the sum of the volume of inorganic fillers, pigments and polyamide and polyacrylonitrile powder.

**4.** A process according to claim 2 or 3, characterised in that an aqueous filler material is used in which the polyamide powders and/or polyacrylonitrile powders neither melt, nor are dissolved or swollen at temperatures up to 80 °C.

**5.** A process according to any one of claims 1 to 4, characterised in that a binder vehicle is used which contains 60 to 90 % by weight of a mixture or partial condensation product of a water-insoluble film-forming polyhydroxyl compound with an acid number less than 10 mg KOH/g and a hydroxyl number of 50 - 650 mg KOH/g and a film-forming polycarboxyl compound with an acid number of 30 - 280 mg KOH/g in a molar ratio of carboxyl groups to hydroxyl groups of 1 : 2 to 1 : 25, with partially or completely neutralised carboxyl groups, and 10 - 40 % by weight of a polyvalent film-forming synthetic resin with no polyelectrolyte character which is capable of reacting with hydroxyl groups, wherein the percentages by weight relate in each case to the solids content, and water.

**6.** A process according to any one of claims 1 to 5, characterised in that a binder vehicle is used which has a polydispersity ($D = Mw/Mn$) of > 3.5.

7. A process according to any one of claims 1 to 6, characterised in that an aqueous binder vehicle is used which has been thinned with water to a resin solids content of 35 - 60 % by weight.

8. A process according to any one of claims 1 to 7, characterised in that an aqueous binder vehicle is used in which the film-forming polycarboxyl compound comprises addition products of maleic anhydride to unsaturated fatty acid esters.

9. A process according to any one of claims 1 to 8, characterised in that an aqueous binder vehicle is used in which the water-insoluble film-forming polyhydroxy compound comprises esters of dicarboxylic acids.

10. A process according to any one of claims 1 to 9, characterised in that an aqueous binder vehicle is used in which the polyvalent film-forming synthetic resin with no polyelectrolyte character is a melamine resin, preferably hexamethoxymethyl melamine.

11. A process according to any one of the preceding claims, characterised in that an aqueous filler material is used in which the powders are coated by friction with a paste resin, particularly with a melamine resin as the paste resin.

12. A process according to any one of the preceding claims, characterised in that it is carried out for the coating of motor vehicle parts.

13. A process according to any one of the preceding claims, characterised in that the primer is deposited by cathodic electrodeposition from an aqueous coating medium comprising an epoxy resin containing self-crosslinking or externally crosslinkable amino groups based on bisphenol A with a content of at least 65 mole % of units based on bisphenol A.

14. A process according to claim 13, characterised in that an epoxy resin containing amino groups is used for self-crosslinking which comprises 1.2 mole % of blocked isocyanate groups.

15. A process according to claim 14, characterised in that at least 15 % of blocked polyisocyanate which contains at least 8 mole % of blocked isocyanate groups is used in addition for self-crosslinking.

16. An aqueous filler material for the production of stone impact-resistant multilayer coatings, containing one or more water-thinnable binder vehicles which can be hardened at temperatures up to 180°C and which are based on polycarboxyl compounds containing hydroxyl groups and one or more polyvalent film-forming synthetic resins which are capable of reacting with hydroxyl groups, as well as 0.1 to 20 % by weight, with respect to the total aqueous filler material, of polyamide powder or mixtures of polyamide powder and polyacrylonitrile powder having particle diameters in the range from 0.1 to 100 µm, wherein the high-solid value of the aqueous filler material is not less than 75 % by weight.

17. An aqueous filler material according to claim 16, containing a binder vehicle which contains 60 to 90 % by weight of a mixture or partial condensation product of a water-insoluble film-forming polyhydroxyl compound with an acid number less than 10 mg KOH/g and a hydroxyl number of 50 - 650 mg KOH/g and a film-forming polycarboxyl compound with an acid number of 30 - 280 mg KOH/g in a molar ratio of carboxyl groups to hydroxyl groups of 1 : 2 to 1 : 25, with partially or completely neutralised carboxyl groups, and 10 - 40 % by weight of a polyvalent film-forming synthetic resin with no polyelectrolyte content character which is capable of reacting with hydroxyl groups, wherein the percentages by weight relate in each case to the solids content.

18. An aqueous filler material according to claim 16 or 17, characterised in that it additionally contains inorganic fillers and/or pigments.

19. An aqueous filler material according to claim 18, characterised in that it contains 5 to 60 % by volume of polyamide powder or mixtures of polyamide powder and polyacrylonitrile powder, with respect to the sum of inorganic fillers, pigments, polyamide powder and polyacrylonitrile powder.

20. The use of the aqueous filler materials according to any one of claims 16 to 19 for the production of stone impact-resistant coatings.

21. A use according to claim 20 for the production of stone impact-resistant filler- or intermediate layers in multilayer coatings.

22. A use according to claim 20 or 21 in the coating of motor vehicles and parts thereof.

**Revendications**

1. Procédé pour la réalisation d'un revêtement multicouchez résistant au choc de pierres sur des substrats électriquement conducteurs par application d'une couche de fond par électrodéposition cathodique constituée d'une composition de revêtement aqueuse, puis par application humide-sur-humide, après évacuation de l'air ou cuisson, d'une couche de remplissage constituée d'une masse de remplissage aqueuse contenant un ou plusieurs liants diluables dans l'eau, durcissables à des températures allant jusqu'à 180 °C et par application humide-sur-humide, après évacuation de l'air ou cuisson, d'une ou plusieurs couches de base et couches de vernis de finition,

   caractérisé en ce que l'on utilise une masse de remplissage aqueuse contenant un liant diluable dans l'eau à base de composés polycarboxylés contenant des groupes hydroxyles et d'une ou plusieurs résines synthétiques filmogènes polyvalentes pouvant réagir avec les groupes hydroxyles et 0,1 à 20 % en poids, rapporté à la masse de remplissage aqueuse totale, de poudre de polyamide, de poudre de polyacrylonitrile ou de mélanges de ces poudres présentant des diamètres de particules compris entre 0,1 et 100 µm, la valeur High-Solid de la masse de remplissage aqueuse n'étant pas inférieure à 75 % en poids.

2. Procédé selon la revendication 1, caractérisé en ce que l'on utilise une masse de remplissage aqueuse contenant en plus des pigments et/ou des matières de charge minérales.

3. Procédé selon la revendication 2, caractérisé en ce que l'on utilise une masse de remplissage aqueuse dans laquelle la poudre de polyamide et/ou de polyacrylonitrile représente 5 à 100 % en volume de la somme des volumes des matières de charge minérales, des pigments et des poudres de polyamide et de polyacrylonitrile.

4. Procédé selon la revendication 2 ou 3, caractérisé en ce que l'on utilise une masse de remplissage aqueuse dans laquelle les poudres de polyamide et/ou de polyacrylonitrile ni ne fondent ni ne se dissolvent ou gonflent.

5. Procédé selon l'une des revendications 1 à 4, caractérisé en ce que l'on utilise un liant contenant 60 à 90 % en poids d'un mélange ou d'un produit de condensation partiel d'un composé polyhydroxylé filmogène insoluble dans l'eau ayant un indice d'acide inférieur à 10 mg KOH/g et un indice hydroxyle compris entre 50 et 650 mg KOH/g et d'un compose polycarboxylé filmogène ayant un indice d'acide compris entre 30 et 280 mg/g, les groupes carboxyliques et les groupes hydroxyles étant dans un rapport molaire compris entre 1:2 et 1:25, les groupes carboxyliques étant partiellement ou totalement neutralisés, et 10 à 40 % en poids d'une résine synthétique fllmogène polyvalente pouvant réagir avec les groupes hydroxyles ne présentant pas de caractère polyélectrolyte et de l'eau, les % en poids se rapportant à la teneur en matière solide.

6. Procédé selon l'une des revendications 1 à 5, caractérisé en ce que l'on utilise un liant présentant une polydispersité supérieure à 3,5 ($D = M_w/M_n$).

7. Procédé selon l'une des revendications 1 à 6, caractérisé en ce que l'on utilise un liant aqueux dilué avec de l'eau jusqu'à avoir une teneur en matière solide de résine comprise entre 35 et 60 % en poids.

8. Procédé selon l'une des revendications 1 à 7, caractérisé en ce que l'on utilise un liant aqueux dans lequel le composé polycarboxylé filmogène est un produit d'addition de l'anhydride maléique et d'esters d'acides gras insaturés.

9. Procédé selon l'une des revendications 1 à 8, caractérisé en ce que l'on utilise un liant aqueux dans lequel le composé polycarboxylé filmogène insoluble dans l'eau est un ester d'acides dicarboxyliques avec des polyols.

10. Procédé selon l'une des revendications 1 à 9, caractérisé en ce que l'on utilise un liant aqueux dans lequel la résine synthétique filmogène polyvalente ne présentant pas de caractère polyélectrolyte est une résine de mélamine, de préférence, l'hexaméthoxyméthylmélamine.

11. Procédé selon l'une des revendications précédentes, caractérisé en ce que l'on utilise une masse de remplissage aqueuse dans laquelle les poudres ont été broyées avec une résine pour pâte, en particulier avec une résine de mélamine comme résine pour pâte.

12. Procédé selon l'une des revendications précédentes, caractérisé en ce qu'il est utilisé pour le revêtement de peinture d'éléments de voitures automobiles.

13. Procédé selon l'une des revendications précédentes, caractérisé en ce que l'on dépose la couche de fond par électrodéposition cathodique réalisée par une composition de revêtement aqueuse constituée d'une résine époxyde autoréticulante ou réticulant par des agents extérieurs contenant des groupes amino à base de bisphénol A contenant au moins 65 % en mole d'unités basées sur le bisphénol A.

14. Procédé selon la revendication 13, caractérisé en ce que l'on utilise pour l'autoréticulation une résine époxyde contenant des groupes amino, présentant 1,2 % en mode de groupes isocyanates bloqués.

15. Procédé selon la revendication 14, caractérisé en ce que l'on opère pour la réticulation par des agents extérieurs en plus avec au moins 15 % de polyisocyanate bloqué contenant au moins 8 % en mole de groupes isocyanates bloqués.

16. Masse de remplissage aqueuse destinée à la réalisation de revêtements multicouches résistant au choc de pierres contenant un ou plusieurs liants diluables dans l'eau, durcissables à des températures allant jusqu'à 180 °C, à base de composés polycarboxylés contenant des groupes hydroxyles et d'une ou plusieurs résines synthétiques filmogènes polyvalentes pouvant réagir avec les groupes hydroxyles, ainsi que 0,1 à 20 % en poids, rapporté à la masse de remplissage aqueuse totale, de poudre de polyamide ou de mélanges de poudre de polyamide et de poudre de polyacrylonitrile présentant des diamètres de particules compris entre 0,1 et 100 $\mu$m, la valeur High-Solid de la masse de remplissage n'étant pas inférieure à 75 % en poids.

17. Masse de remplissage aqueuse selon la revendication 16, contenant un liant comprenant 60 à 90 % en poids d'un mélange ou d'un produit de condensation partiel d'un compose polyhydroxylé filmogène insoluble dans l'eau ayant un indice d'acide inférieur à 10 mg KOH/g et un indice hydroxyle compris entre 50 et 650 mg KOH/g et d'un composé polycarboxylé filmogène ayant un indice d'acide compris entre 30 et 280 mg KOH/g, les groupes carboxyliques et les groupes hydroxyles étant dans un rapport molaire allant de 1:2 à 1:25, les groupes carboxyliques étant partiellement ou totalement neutralisés, et 10 à 40 % en poids d'une résine synthétique filmogène polyvalente pouvant réagir avec les groupes hydroxyles ne présentant pas de caractère polyélectrolyte, les % en poids se rapportant à la teneur en matière solide.

18. Masse de remplissage aqueuse selon la revendication 16 ou 17, caractérisée en ce qu'elle contient en plus des matières de charge minérales et/ou des pigments.

19. Masse de remplissage selon la revendication 18, caractérisée en ce qu'elle contient 5 à 60 % en volume de poudre de polyamide ou de mélanges de poudre de polyamide et de poudre de polyacrylonitrile, rapporté à la somme des matières de charge minérales, des pigments, des poudres de polyamide et de polyacrylonitrile.

20. Utilisation des masses de remplissage aqueuses selon l'une des revendications 16 à 19 pour la réalisation de revêtements résistant au choc de pierres.

**21.** Utilisation selon la revendication 20 pour la réalisation de couches de remplissage ou de couches intermédiaires dans les revêtements multicouches.

**22.** Utilisation selon la revendication 20 ou 21 pour le revêtement de peinture des voitures automobiles ou de leurs éléments.